# FASCICULE DE BREVET EUROPEEN

(11) **EP 1 848 977 B1**
(45) Date de publication et mention de la délivrance du brevet: **23.07.2008**
(21) Numéro de dépôt: 06709308.8
(22) Date de dépôt: 14.02.2006
(51) Int. Cl.: G01M 3/02, F16K 3/08

(54) **VANNE DE DISTRIBUTION**
VERTEILVENTIL
DISTRIBUTION VALVE

(30) Priorité: 15.02.2005 FR 0501496
(43) Date de publication de la demande: 31.10.2007
(73) Titulaire: Leymarie, Michel, 95320 Saint Leu La Forêt (FR)
(72) Inventeur: Leymarie, Michel, 95320 Saint Leu La Forêt (FR)
(74) Mandataire: Chambon, Gérard
(86) Numéro de dépôt international: PCT/FR2006/000327
(87) Numéro de publication internationale: WO 2006/087457

(56) Documents cités:
- EP-A- 0 632 258
- GB-A- 1 438 275
- US-A- 2 744 540
- PATENT ABSTRACTS OF JAPAN vol. 010, no. 215 (P-481), 26 juillet 1986 (1986-07-26) & JP 61 053539 A (BRIDGESTONE CORP), 17 mars 1986 (1986-03-17)

## Description

L'invention concerne une vanne de distribution pour fluide, notamment pour équiper un appareil de contrôle d'étanchéité d'objets creux.

Il est connu de contrôler l'étanchéité d'objets creux ou pièces creuses dans divers domaines tels que l'automobile, l'électroménager, le médical, l'emballage, etc.

Pour ce type de contrôle, on soumet généralement l'objet à contrôler à un fluide sous pression et on cherche à mesurer une chute de pression due à une éventuelle fuite. Il s'agit donc d'un contrôle d'étanchéité par mesure de fuite.

Toutefois, il est clair que les appareils destinés à effectuer ce type de mesure et qui nécessitent bien sûr l'utilisation de vannes, doivent être d'une très grande précision afin de mesurer de faibles fuites.

Etant donné que l'on cherche par conséquent dans cette application à mesurer des fuites avec une grande précision, il est évident que les vannes utilisées doivent elles-mêmes ne présenter que des risques limités de fuites internes et présenter en outre une grande précision, notamment en conservant une grande stabilité des volumes. Les risques limités de fuite et la stabilité des volumes ne peuvent pas être obtenus avec les vannes classiques à tiroir ou à clapet dans lesquelles l'étanchéité est obtenue par déformation des joints entraînant notamment une variation de volume et donc une modification de la pression.

Pour pallier ces inconvénients, l'inventeur a conçu une vanne apte à équiper ce type d'appareil mais aussi bien entendu susceptible de satisfaire d'autres applications.

Outre le fait d'une très grande précision et d'une grande stabilité des volumes, la vanne selon l'invention permet d'envisager l'utilisation d'un circuit de fluide très complexe et donc de réduire le nombre de moyens (actionneurs et autres) nécessaires à ce type d'appareil de contrôle d'étanchéité.

La grande compacité de la vanne selon l'invention facilite de plus son installation.

Pour atteindre ces buts l'invention propose une vanne de distribution pour fluide comportant deux surfaces de contact, montées mobiles l'une sur l'autre, qui est notamment remarquable en ce qu'elle comporte une chambre hermétique dont l'une des parois, dite de communication, est pourvue d'orifices formant des passages de circulation du fluide, et dans laquelle est montée de manière mobile une pièce qui est en contact étanche avec ladite paroi, ou une pièce solidaire de celle-ci, et qui est pourvue d'orifices destinés à s'aligner ou non avec au moins certains orifices de la chambre selon la position relative de la pièce mobile par rapport à ladite chambre, la pièce mobile étant en outre pourvue de canaux mettant en communication certains au moins des orifices dont elle est munie, tandis qu'au moins l'un desdits canaux permet de faire communiquer au moins deux orifices alignés, appartenant, pour l'un, à la chambre, et pour l'autre, à la pièce mobile, avec le volume intérieur de ladite chambre dans une positon relative donnée de la pièce mobile par rapport à la chambre, en vue du remplissage et du vidage de la chambre de telle sorte que l'ensemble peut rester à volonté soumis à la contre pression de remplissage.

Le fait d'utiliser des surfaces de contact, donc sans déformation, assure une stabilité des volumes, tandis que la contre pression ainsi réalisée par le remplissage de la chambre hermétique rend les éventuelles fuites internes de la vanne, négligeables.

Selon un mode de réalisation avantageux, la pièce mobile est un disque entraîné en rotation, la position de remplissage de la chambre étant déterminée par une position de rotation donnée du disque mobile par rapport à la chambre.

Dans ce cas par exemple, un disque complémentaire surfacé est solidarisé avec la paroi de communication de la chambre hermétique, et comporte des orifices qui sont alignés avec les orifices de ladite paroi de la chambre.

Bien qu'une vanne selon l'invention soit destinée à de nombreuses applications, elle est en particulier avantageuse pour équiper un appareil de contrôle d'étanchéité d'un objet creux par mesure de fuite et elle est alors notamment remarquable en ce que dans la position de remplissage de la chambre hermétique de ladite vanne, au moins un orifice de la chambre et au moins un orifice de la pièce mobile sont prévus pour mettre en communication l'objet à contrôler avec ladite chambre, tandis que dans une autre position relative de la pièce mobile, dite de mesure, lesdits orifices de mise en communication de l'objet avec la chambre sont obturés ou dérivés pour isoler ledit objet de ladite chambre.

Dans ce cas, selon un mode de réalisation en mesure directe, l'orifice de la chambre pour la mise en communication de l'objet avec ladite chambre, est relié à un capteur de pression en vue d'établir des mesures de pression dans la position de remplissage et dans la position de mesure pour établir une éventuelle valeur de fuite dans ledit objet à contrôler.

Selon un autre mode particulier de réalisation, pour équiper un appareil de contrôle d'étanchéité d'un objet creux par mesure de fuite, à partir d'un objet de référence, dans la position de remplissage de la chambre hermétique de la vanne, au moins un orifice de la chambre et au moins un orifice de la pièce mobile sont prévus pour mettre en communication également l'objet de référence avec ladite chambre et dans la position de mesure, certains orifices de la chambre et de la pièce mobile sont prévus pour mettre en communication par certains canaux de la pièce mobile, l'objet de référence avec un capteur de pression et l'objet à contrôler avec un capteur de pression, en vue d'établir une mesure de la différence des pressions qui règnent dans les objets respectivement de référence et à contrôler afin de calculer une éventuelle valeur de fuite dans ledit objet à contrôler.

Dans ce dernier cas par exemple, l'objet à contrôler et l'objet de référence sont mis en communication chacun avec un capteur de pression distinct, constituant des capteurs respectivement de contrôle et de référence, ou encore avantageusement, l'objet à contrôler et l'objet de référence sont mis en communication tous les deux avec un capteur de pression différentiel destiné à mesurer directement la pression différentielle entre les objets respectivement de référence et à contrôler.

En outre et en particulier avec les modes de réalisation de mesures différentielles, la chambre hermétique est reliée à un capteur de pression pour déterminer la pression dans ladite chambre et éventuellement dans les éléments en communication avec celle-ci au moment de la mesure.

Avantageusement, certains orifices de la chambre et de la pièce mobile selon une position donnée de cette dernière sont prévus pour assurer une fuite prédéterminée de référence dans l'objet à contrôler.

Toujours pour une utilisation dans un appareil de contrôle d'étanchéité et selon un mode de réalisation, les orifices de remplissage et de vidage de la chambre hermétique sont prévus pour être branchés sur un régulateur de pression, lui-même raccordé à une alimentation en fluide et à une mise à l'atmosphère.

L'invention sera bien comprise à la lecture de la description qui va suivre et qui se réfère aux dessins annexés dans lesquels:
- la figure 1 est une coupe axiale d'une vanne selon un mode de réalisation de l'invention, représentée dans une position de remplissage, pour une application particulière,
- la figure 2 est une coupe transversale selon II-II de la figure 1,
- la figure 3 correspond à la figure 1, mais dans une position de mesure,
- la figure 4 est une coupe transversale selon IV-IV de la figure 3,
- les figures 5 et 7 correspondent aux figures 1 et 3 selon un autre mode de réalisation,
- les figures 6 et 8 sont des coupes transversales selon VI-VI et VIII-VIII des figures respectivement 5 et 7,
- la figure 9 schématise l'utilisation d'une vanne selon les figures 5 à 8 dans un appareil de contrôle d'étanchéité d'un objet.

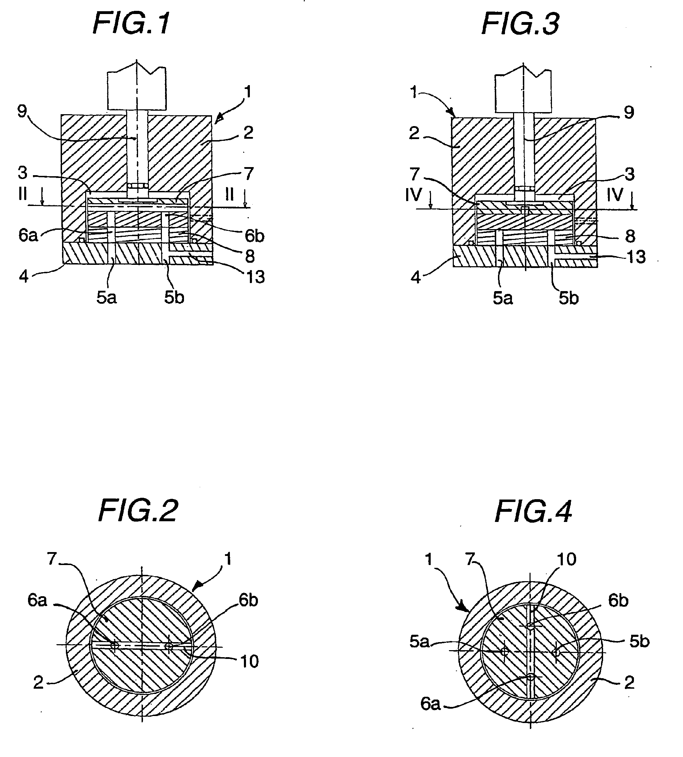

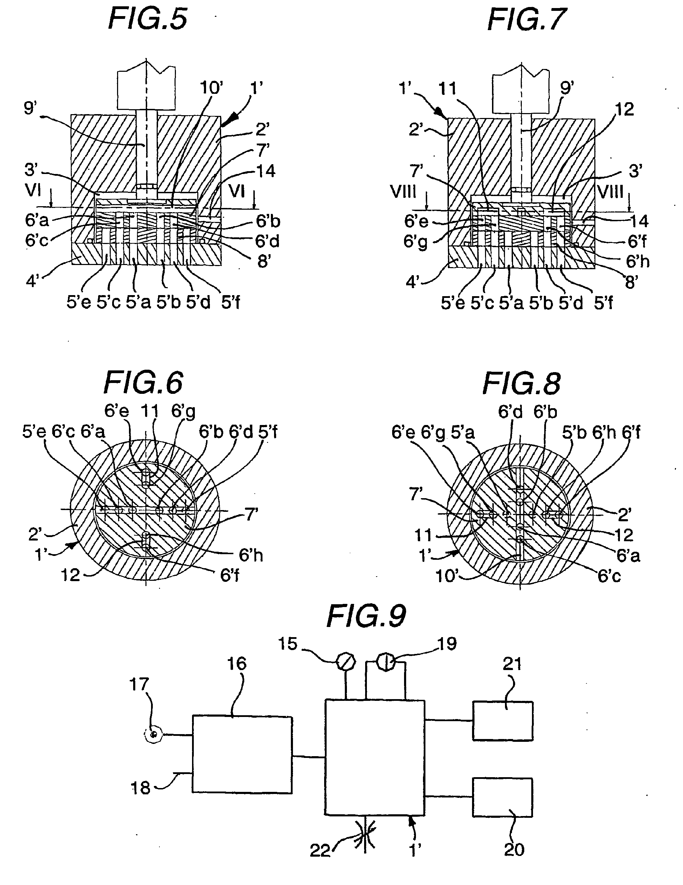

Les figures 1 à 4 d'une part, et 5 à 8 d'autre part, schématisent deux modes simplifiés d'une vanne 1, 1' selon l'invention, donnés à titre d'exemples non limitatifs. Pour une meilleure compréhension, les éléments correspondants du mode de réalisation des figures 5 à 8 par rapport au mode de réalisation des figures 1 à 4, portent les mêmes références assorties du symbole « prime ».

Les vannes représentées sur les dessins comportent un corps 2, 2' dans lequel est aménagée une cavité formant une chambre hermétique 3, 3'.

La chambre 3, 3' comporte une paroi 4, 4' qui est pourvue d'orifices tels que 5a et 5b sur les figures 1 et 2 et 5'a à 5'f sur les figures 5 à 8.

Dans la chambre 3, 3' est montée de manière rotative une pièce 7, 7' (un mouvement translatif n'est toutefois pas exclu) sous forme ici d'un disque tandis que sur la surface intérieure de la paroi 4, 4' de la chambre 3, 3' est fixée de manière solidaire une pièce complémentaire 8, 8' également sous la forme d'un disque et qui présente des orifices alignés avec ceux de ladite paroi 4, 4', lesdits orifices de la pièce 8, 8' peuvent ainsi être repérés par les mêmes références puisqu'ils constituent des passages en continu. En effet, la présence de la pièce 8, 8' est principalement due à des raisons techniques, les pièces 7, 7', d'une part et, 8, 8,' d'autre part, étant par exemple au moins en partie en céramique et parfaitement surfacées de telle sorte que la pièce 7, 7' tourne et s'applique sur la pièce 8, 8' de manière étanche.

Pour cette rotation, la pièce mobile 7, 7' est ici solidaire d'un axe d'entraînement 9, 9' motorisé, comme le montrent bien les figures 1, 3, 5, 7.

La pièce mobile 7, 7' est aussi pourvue d'orifices 6a, 6b (figures 1 à 4) ou 6'a-6'h (figures 5 à 8) qui traversent complètement ladite pièce et qui sont destinés à s'aligner ou non avec au moins certains orifices de la pièce 8, 8' et de la paroi 4, 4' de la chambre, selon la position relative de ladite pièce mobile par rapport à ladite chambre.

En outre, la pièce mobile 7, 7' comporte des canaux tels que 10 (figures 1 à 4) ou 10', 11, 12 (figures 5 à 8) destinés à mettre en communication entre eux certains orifices de la pièce mobile créant ainsi des passages de circulation du fluide.

A cet effet, aussi pour des raisons techniques et comme le montrent les dessins, la pièce mobile 7, 7' est conçue en deux parties, l'une d'elle étant pourvue des orifices et l'autre des canaux précités.

Les figures 1 et 2 représentent un mode de réalisation dans une position dite de remplissage de la chambre 3 et les figures 3 et 4 le représentent dans une autre position, par exemple de mesure pour certaines applications.

On peut voir et on comprend que les orifices 5a et 5b de la paroi 4 et de la pièce fixe 8 sont alignés sur les orifices 6a et 6b de la pièce mobile 7 tandis qu'un canal 10 de ladite pièce 7 met en communication entre eux lesdits orifices 6a et 6b tandis que ledit canal 10 débouche dans la chambre 3.

De la sorte, si l'orifice 5a est relié à un moyen d'alimentation en fluide (par exemple de l'air) sous une certaine pression choisie, la chambre 3 se remplit sous ladite pression.

Dans cet exemple, l'orifice 5b peut être relié à un objet creux tandis que l'orifice 13 représenté sur les figures 1 et 3 peut être relié à un capteur de pression, comme il sera précisé ci-après à propos de la description d'une application particulière.

A partir de la position des figures 1 et 2, la pièce mobile 7 peut subir une rotation, ici d'un quart de tour dans le sens trigonométrique en regardant les figures 2 et 4, afin de passer de la position des figures 1 et 2 à la position des figures 3 et 4.

Dans cette dernière position, la pièce mobile 7 obture les orifices 5a et 5b en les isolant de la chambre 3. Dans cette position, on comprend que les risques de fuite de cette vanne sont limités du fait que les pièces 7 et 8, et en particulier les orifices 5a et 5b, restent alors sous la contre pression qui règne dans la chambre 3.

La vanne des figures 1 à 4 peut être utilisée dans un appareil du type de celui de la figure 9, mais simplifié comme il sera décrit ci-après.

Le mode de réalisation des figures 5 à 8 va maintenant être décrit dans le cadre de l'application schématisée à la figure 9 représentant un appareil de contrôle d'étanchéité d'une pièce ou d'un objet creux.

Dans ce mode de réalisation, par rapport à celui précédemment décrit, la paroi 4' et la pièce 8' comportent des orifices référencés 5'a-5'f et la pièce 7' des orifices 6'a-6'h.

Dans la position des figures 5 et 6, les orifices 5'a-5'd sont alignés avec les orifices respectivement 6'a-6'd de la pièce 7', le canal 10' de ladite pièce 7' mettant en communication tous les orifices précités avec l'intérieur de la chambre 3'.

Au contraire, dans la position des figures 7 et 8, après une rotation d'un quart de tour de la pièce 7' dans le sens trigonométrique en regardant les figures 6 et 8, les orifices 5'a et 5'b sont obturés, tandis que les orifices 5'c, 5'e d'une part, et 5'd, 5'f, d'autre part, sont alignés avec les orifices 6'g, 6'e et respectivement 6'h, 6'f.

En outre, on peut constater que les orifices 6'e, 6'g, d'une part, et 6'f, 6'h, d'autre part, communiquent entre eux par les canaux respectivement 11 et 12 de la pièce 7'.

Par ailleurs, un orifice 14, ménagé dans l'une des parois de la chambre 3', est prévu pour être relié à un capteur de pression 15 (figure 9) dont il sera question ci-après.

Sur la figure 9, on peut voir la vanne 1' reliée à un régulateur de pression 16, lui-même en communication avec une alimentation en fluide 17 et une mise à l'atmosphère 18.

La vanne comporte aussi un capteur de pression différentiel 19 et il est relié à un objet de référence 20 et à un objet à contrôler 21.

Par ailleurs, on peut également voir sur ladite figure 9 un moyen 22 relié à la vanne 1' prévu pour réaliser une fuite prédéterminée dans le circuit.

Le régulateur de pression 16 est par exemple relié à la vanne 1' par les orifices 5'a, 5'b de celle-ci afin d'assurer pour ladite vanne son remplissage par 17 et son vidage par 18.

Les objets respectivement de référence 20 et à contrôler 21 sont reliés à la vanne 1', par exemple par les orifices respectivement 5'c et 5'd, tandis que le capteur de pression différentiel 19 est connecté par les orifices 5'e et 5'f.

Le contrôle d'étanchéité de l'objet 21 est maintenant simple à comprendre.

Après le remplissage de la chambre 3' et des objets 20 et 21 au moyen du régulateur de pression 16 de l'alimentation 17 et des orifices 5'a, 5'b, 5'c, 5'd, 6'a, 6'b, 6'c, 6'd de la vanne 1' dans la position des figures 5 et 6 et dans laquelle on peut mesurer la pression au moyen du capteur 15 branché sur l'orifice 14, on passe à la mesure de contrôle selon les figures 7 et 8.

Dans cette dernière position des figures 7 et 8, le capteur de pression différentiel branché sur les orifices 5'e et 5'f de la vanne 1' permet de comparer la pression entre l'objet de référence et l'objet à contrôler et ainsi de mesurer de manière précise par différence une éventuelle fuite de l'objet 21.

En outre, en créant artificiellement une fuite étalon d'une valeur prédéterminée par le moyen 22 on peut valider la mesure en garantissant qu'aucune interférence ne perturbe ladite mesure.

On comprend aussi que le capteur différentiel 19 peut être remplacé par des capteurs distincts.

De plus, le mode de réalisation des figures 1 à 4 peut être prévu dans le cadre de l'application de la figure 9 en mesure directe, l'objet de référence étant supprimé et le capteur différentiel étant remplacé par un simple capteur de contrôle branché sur l'orifice 13 mentionné ci-avant à propos des figures 1 et 3, le capteur de pression 15 de la figure 9 pouvant toutefois être conservé et branché sur l'orifice montré en pointillés (non référencé) sur lesdites figures 1 et 3. On peut donc mesurer ici en direct une pression dans l'objet à contrôler, après remplissage de la chambre sous une certaine pression, puis isolation de l'objet.

Pour finir, on peut vider de nouveau les chambres 3, 3' par rotation des pièces 7, 7' et mise à l'atmosphère, un cycle complet de mesure correspondant à une rotation programmée des pièces mobiles.

A cet effet, la vanne peut bien sûr comporter d'autres orifices non décrits plus spécialement pour simplifier.

## Revendications

1. Vanne de distribution (1,1') pour fluide comportant deux surfaces de contact, montées mobiles l'une sur l'autre, **caractérisée en ce qu'**elle comporte une chambre hermétique (3,3') dont l'une (4,4') des parois, dite de communication, est pourvue d'orifices (5a,5b ; 5'a-5'f) formant des passages de circulation du fluide, et dans laquelle est montée de manière mobile une pièce (7,7') qui est en contact étanche avec ladite paroi, ou une pièce solidaire (8,8') de celle-ci, et qui est pourvue d'orifices (6a,6b ; 6'a-6'h) destinés à s'aligner ou non avec au moins certains orifices de la chambre selon la position relative de la pièce mobile par rapport à ladite chambre, la pièce mobile étant en outre pourvue de canaux (10 ; 10',11,12) mettant en communication certains au moins des orifices dont elle est munie, tandis qu'au moins l'un (10 ; 10') desdits canaux permet de faire communiquer au moins deux orifices alignés, appartenant, pour l'un, à la chambre, et pour l'autre, à la pièce mobile, avec le volume intérieur de ladite chambre dans une positon relative donnée de la pièce mobile par rapport à la chambre, en vue du remplissage et du vidage de la chambre de telle sorte que l'ensemble peut rester à volonté soumis à la contre pression de remplissage.

2. Vanne de distribution (1,1') selon la revendication 1, **caractérisée en ce que** la pièce mobile (7,7') est un disque entraîné en rotation, la position de remplissage de la chambre étant déterminée par une position de rotation donnée du disque mobile par rapport à la chambre.

3. Vanne de distribution (1,1') selon la revendication 2, **caractérisée en ce qu'**un disque complémentaire (8,8') surfacé est solidarisé avec la paroi de communication (4,4') de la chambre hermétique (3,3'), et comporté des orifices qui sont alignés avec les orifices (5a,5b ; 5'a-5'f) de ladite paroi de la chambre.

4. Vanne de distribution (1,1') selon l'une des revendications 1 à 3 destinée à équiper un appareil de contrôle d'étanchéité d'un objet creux (21) par mesure de fuite, **caractérisée en ce que** dans la position de remplissage de la chambre hermétique (3,3') de ladite vanne, au moins un orifice (5b ; 5'd) de la chambre et au moins un orifice (6b ; 6'd) de la pièce mobile (7,7') sont prévus pour mettre en communication l'objet à contrôler avec ladite chambre, tandis que dans une autre position relative de la pièce mobile, dite de mesure, lesdits orifices de mise en communication de l'objet (21) avec la chambre sont obturés ou dérivés pour isoler ledit objet de ladite chambre.

5. Vanne de distribution (1) selon la revendication 4, **caractérisée en ce que** l'orifice (5b) de la chambre pour la mise en communication de l'objet (21) avec ladite chambre, est relié (13) à un capteur de pression en vue d'établir des mesures de pression dans la position de remplissage et dans la position de mesure pour établir une éventuelle valeur de fuite dans ledit objet à contrôler.

6. Vanne de distribution (1') selon la revendication 4 destinée à équiper un appareil de contrôle d'étanchéité d'un objet creux (21) par mesure de fuite, à partir d'un objet de référence (20), **caractérisée en ce que** dans la position de remplissage de la chambre hermétique (3') de ladite vanne, au moins un orifice (5'c) de la chambre et au moins un orifice (6'c) de la pièce mobile (7,7') sont prévus pour mettre en communication également l'objet de référence (20) avec ladite chambre et **en ce que** dans la position de mesure, certains orifices (5'e,5'f) de la chambre et de la pièce mobile (6'e,6'f) sont prévus pour mettre en communication par certains canaux (11,12) de la pièce mobile, l'objet de référence avec un capteur de pression et l'objet à contrôler avec un capteur de pression, en vue d'établir une mesure de la différence des pressions qui règnent dans les objets respectivement de référence et à contrôler afin de calculer une éventuelle valeur de fuite dans ledit objet à contrôler.

7. Vanne de distribution selon la revendication 6, **caractérisée en ce que** l'objet à contrôler (21) et l'objet de référence (20) sont mis en communication chacun avec un capteur de pression distinct, constituant des capteurs respectivement de contrôle et de référence.

8. Vanne de distribution selon la revendication 6, **caractérisée en ce que** l'objet à contrôler (21) et l'objet de référence (20) sont mis en communication tous les deux avec un capteur de pression différentiel (19) destiné à mesurer directement la pression différentielle entre les objets respectivement de référence et à contrôler.

9. Vanne de distribution selon l'une des revendications 4 à 8, **caractérisée en ce que** la chambre hermétique (3,3') est reliée (14) à un capteur de pression (15) pour déterminer la pression dans ladite chambre et éventuellement dans les éléments en communication avec celle-ci au moment de la mesure.

10. Vanne de distribution selon l'une des revendications 4 à 9, **caractérisée en ce que** certains orifices de la chambre (3,3') et de la pièce mobile (7,7') selon une position donnée de cette dernière sont prévus pour assurer une fuite prédéterminée de référence dans l'objet à contrôler (21).

11. Vanne de distribution selon l'une des revendications 4 à 10, **caractérisée en ce que** les orifices de remplissage et de vidage de la chambre hermétique (3,3') sont prévus pour être branchés sur un régulateur de pression (16), lui-même raccordé à une alimentation (17) en fluide et à une mise à l'atmosphère (18).

## Claims

1. Distribution valve (1, 1') for fluid comprising two contact surfaces, mounted displaceably one on the other, **characterised in that** it comprises a sealed chamber (3, 3'), one wall (4, 4') of which, called the communicating wall, is provided with orifices (5a, 5b; 5'a-5'f) forming passages for circulation of the fluid, and in which is mounted displaceably a part (7, 7') which is in sealed contact with said wall, or a part (8, 8') locked thereto, and which is provided with orifices (6a, 6b; 6'a-6'h) designed to be aligned or otherwise with at least some orifices of the chamber according to the relative position of the part which is displaceable in relation to said chamber, the part which is displaceable being additionally provided with channels (10; 10', 11, 12) establishing communication between at least some of the orifices with which it is equipped, while at least one (10; 10') of said channels allows communication to be established between at least two aligned orifices belonging firstly to the chamber and secondly to the part which is displaceable, and the internal volume of said chamber in a given relative position of the part which is displaceable in relation to the chamber, with a view to filling and emptying of the chamber such that the assembly can optionally remain subject to the filling back pressure.

2. Distribution valve (1, 1') according to claim 1, **characterised in that** the part (7, 7') which is displaceable is a disc which is entrained in rotation, the filling position of the chamber being determined by a given rotational position of the disc which is displaceable in relation to the chamber.

3. Distribution valve (1, 1') according to claim 2, **characterised in that** a complementary surfaced disc (8, 8') is locked to the communicating wall (4, 4') of the sealed chamber (3, 3'), and comprises orifices which are aligned with the orifices (5a, 5b; 5'a-5'f) of said wall of the chamber.

4. Distribution valve (1, 1') according to one of claims 1 to 3, designed to be fitted to an apparatus for leak testing of a hollow object (21) by measuring leakage, **characterised in that** in the filling position of the sealed chamber (3, 3') of said valve, at least one orifice (5b; 5'd) of the chamber and at least one orifice (6b; 6'd) of the part (7, 7') which is displaceable are designed to establish communication between the object being checked and said chamber, whereas in another relative position of the part which is displaceable, called the measuring position, said orifices for establishing communication between the object (21) and the chamber are blocked or bypassed to isolate said object from said chamber.

5. Distribution valve (1) according to claim 4, **characterised in that** the orifice (5b) of the chamber for establishing communication between the object (21) and said chamber, is connected (13) to a pressure sensor in order to establish pressure measurements in the filling position and in the measuring position to establish a leakage value in said object being checked.

6. Distribution valve (1') according to claim 4, designed to be fitted to an apparatus for leak testing of a hollow object (21) by measuring leakage, from a reference object (20), **characterised in that** in the filling position of the sealed chamber (3') of said valve, at least one orifice (5'c) of the chamber and at least one orifice (6'c) of the part (7, 7') which is displaceable are designed to additionally establish communication between the reference object (20) and said chamber and **in that** in the measuring position some orifices (5'e, 5'f) of the chamber and some orifices (6'e, 6'f) of the part which is displaceable are designed to establish communication through some channels (11, 12) of the part which is displaceable between the reference object and a pressure sensor, and the object being checked and a pressure sensor with a view to obtaining a measurement of the difference in the pressures which prevail in the reference object and the object being checked respectively in order to calculate a value for any leakage in said object being checked.

7. Distribution valve according to claim 6, **characterised in that** the object being checked (21) and the reference object (20) are each made to communicate with a separate pressure sensor, constituting checking and reference sensors respectively.

8. Distribution valve according to claim 6, **characterised in that** the object being checked (21) and the reference object (20) are both made to communicate with a differential pressure sensor (19) designed to make a direct measurement of the differential pressure between the reference object and the object being checked respectively.

9. Distribution valve according to one of claims 4 to 8, **characterised in that** the sealed chamber (3, 3') is connected (14) to a pressure sensor (15) to determine the pressure in said chamber and possibly in the elements in communication with the latter at the time of measuring.

10. Distribution valve according to one of claims 4 to 9, **characterised in that** some orifices of the chamber (3, 3') and some orifices of the part (7, 7') which is displaceable in a given position of the latter are designed to provide a predetermined reference leak in the object being checked (21).

11. Distribution valve according to one of claims 4 to 10, **characterised in that** the orifices for filling and for emptying the sealed chamber (3, 3') are designed to be connected to a pressure regulator (16), itself connected to a fluid supply (17) and an atmospheric vent (18).

## Patentansprüche

1. Verteilventil (1, 1') für Fluide, zwei Kontaktflächen umfassend, die beweglich aufeinander montiert sind, **dadurch gekennzeichnet, dass** es eine hermetische Kammer (3, 3') aufweist, deren eine Wand (4, 4'), Verbindungswand genannt, mit Öffnungen (5a, 5b; 5'a-5'f) versehen ist, die Durchlässe für die Fluidströmung bilden, und in dem ein Teil (7, 7') beweglich montiert ist, das mit der genannten Wand in abdichtender Berührung steht, oder ein mit diesem fest verbundenes Teil (8, 8'), und das mit Öffnungen (6a, 6b; 6'a-6'h) versehen ist, die dazu bestimmt sind, sich je nach der relativen Stellung des beweglichen Teils relativ zur genannten Kammer mit mindestens bestimmten Öffnungen der Kammer auszurichten oder nicht, wobei das bewegliche Teil außerdem mit Kanälen (10; 10', 11, 12) versehen ist, die mindestens bestimmte der Öffnungen, mit denen sie versehen ist, miteinander verbinden, während mindestens einer (10; 10') der genannten Kanäle erlaubt, in einer gegebenen Stellung des beweglichen Teils relativ zur Kammer mindestens zwei ausgerichtete Öffnungen, von denen die eine der Kammer angehört und die andere dem beweglichen Teil, mit dem Innenvolumen der genannten Kammer zu verbinden, um die Kammer in der Weise zu füllen und zu leeren, dass die Einheit auf Wunsch dem Füllgegendruck unterworfen bleiben kann.

2. Verteilventil (1, 1') nach Patentanspruch 1, **dadurch gekennzeichnet, dass** das bewegliche Teil (7, 7') eine Scheibe ist, die gedreht wird, wobei die Füllstellung der Kammer durch eine gegebene Drehstellung der beweglichen Scheibe relativ zur Kammer bestimmt wird.

3. Verteilventil (1, 1') nach Patentanspruch 2, **dadurch gekennzeichnet, dass** eine plangedrehte Zusatzscheibe (8, 8') mit der Verbindungswand (4, 4') der hermetischen Kammer (3, 3') fest verbunden ist und Öffnungen aufweist, die mit den Öffnungen (5a, 5b; 5'a-5'f) der genannten Wand der Kammer ausgerichtet sind.

4. Verteilventil (1, 1') nach einem der Patentansprüche 1 bis 3, für die Ausrüstung eines Prüfgerätes der Abdichtung eines hohlen Objektes (21) durch Leckmessung bestimmt, **dadurch gekennzeichnet, dass** in der Stellung zum Füllen der hermetischen Kammer (3, 3') des genannten Ventils mindestens eine Öffnung (5b; 5'd) der Kammer und mindestens eine Öffnung (6b; 6'd) des beweglichen Teils (7, 7') vorgesehen sind, um das zu prüfende Objekt mit der genannten Kammer in Verbindung zu bringen, während die genannten Öffnungen zur Herstellung der Verbindung des Objektes (21) mit der Kammer in einer anderen relativen Stellung des beweglichen Teils, der sogenannten Messstellung, geschlossen oder abgeleitet sind, um das genannte Objekt von der genannten Kammer zu trennen.

5. Verteilventil (1) nach Patentanspruch 4, **dadurch gekennzeichnet, dass** die Öffnung (5b) der Kammer zur Herstellung der Verbindung zwischen dem Objekt (21) und der genannten Kammer mit einem Drucksensor verbunden (13) ist, um in der Füllstellung und in der Messstellung Druckmessungen vorzunehmen, um einen eventuellen Leckwert im genannten zu prüfenden Objekt zu bestimmen.

6. Verteilventil (1') nach Patentanspruch 4, für die Ausrüstung eines Prüfgerätes der Abdichtung eines hohlen Objektes (21) durch Leckmessung von einem Bezugsobjekt (20) ausgehend bestimmt, **dadurch gekennzeichnet, dass** in der Stellung zum Füllen der hermetischen Kammer (3') des genannten Ventils mindestens eine Öffnung (5'c) der Kammer und mindestens eine Öffnung (6'c) des beweglichen Teils (7, 7') vorgesehen sind, um auch das Bezugsobjekt (20) mit der genannten Kammer in Verbindung zu bringen, und **dadurch**, dass in der Messstellung bestimmte Öffnungen (5'e 5'f) der Kammer und des beweglichen Teils (6'e, 6'f) vorgesehen sind, um durch bestimmte Kanäle (11, 12) des beweglichen Teils das Bezugsobjekt mit einem Drucksensor zu verbinden und das zu prüfende Objekt mit einem Drucksensor, um eine Messung der Differenz der Drücke auszuführen, die im Bezugsobjekt bzw. im zu prüfenden Objekt herrschen, um einen eventuellen Leckwert im zu prüfenden Objekt zu berechnen.

7. Verteilventil nach Patentanspruch 6, **dadurch gekennzeichnet, dass** das zu prüfende Objekt (21) und das Bezugsobjekt (20) jeweils mit anderen Drucksensoren verbunden sind, die einen Prüfsensor bzw. einen Bezugssensor darstellen.

8. Verteilventil nach Patentanspruch 6, **dadurch gekennzeichnet, dass** das zu prüfende Objekt (21) und das Bezugsobjekt (20) beide mit einem Druckdifferenzsensor (19) verbunden sind, der dazu bestimmt ist, direkt die Druckdifferenz zwischen dem Bezugsobjekt und dem zu prüfenden Objekt zu messen.

9. Verteilventil nach einem der Patentansprüche 4 bis 8, **dadurch gekennzeichnet, dass** die hermetische Kammer (3, 3') mit einem Drucksensor (15) verbunden (14) ist, um den Druck in der genannten Kammer und gegebenenfalls in den Elementen, die zum Zeitpunkt der Messung mit dieser in Verbindung stehen, zu bestimmen.

10. Verteilventil nach einem der Patentansprüche 4 bis 9, **dadurch gekennzeichnet, dass** bestimmte Öffnungen der Kammer (3, 3') und des beweglichen Teils (7, 7') in einer gegebenen Stellung des letztgenannten dafür vorgesehen sind, ein vorbestimmtes Bezugsleck im zu prüfenden Objekt (21) sicherzustellen.

11. Verteilventil nach einem der Patentansprüche 4 bis 10, **dadurch gekennzeichnet, dass** die Öffnungen zum Füllen und Leeren der hermetischen Kammer (3, 3') dafür vorgesehen sind, an einen Druckregler (16) angeschlossen zu werden, der seinerseits mit einer Fluid-Versorgung (17) und mit einer Lüftung (18) verbunden ist.
